# EUROPEAN PATENT APPLICATION

(11) **EP 4 817 452 A1**
(43) Date of publication of application: **07.10.2026**
(21) Application number: 26168529.1
(22) Date of filing: 27.03.2026
(51) Int. Cl.: A42B 3/04, B62H 5/00, G07C 9/00

(54) **A VEHICLE CONTROLLER AND A METHOD OF PROVIDING ACCESS TO THE VEHICLE**

(30) Priority: 30.03.2025 IN 202541031307
(71) Applicant: TVS Motor Company Limited, 600006 Chennai (IN)
(72) Inventor: Joshi, Neeraj, 600006 Chennai (IN); Nanjundaswamy, Likith Malavalli, 600006 Chennai (IN); Ethape, Shival, 600006 Chennai (IN); Sashittal, Shalaka, 600006 Chennai (IN); Awasthi, Arya, 600006 Chennai (IN)
(74) Representative: Patentanwaltskanzlei Matschnig & Forsthuber OG

(57) **Abstract**

The claimed subject matter discloses a vehicle controller 102 and a method 200 of providing access to a vehicle 105. The method 200 is performed by the vehicle controller 102. The method comprises detecting 202 switching on of the vehicle 105, pairing 204 with a helmet 103, receiving 206 a helmet data from at least one sensor 116, 118 placed in the helmet 103 on successful pairing with the helmet 103. The method comprises analyzing 208 the helmet data to check whether the helmet 103 is worn by a rider. The method comprises performing 210 at least one of unlocking a side stand of the vehicle 105 and activating the electric system of the vehicle 105, if the helmet data indicates that the helmet 103 is worn by the rider.

## Description

### TECHNICAL FIELD

The claimed subject matter in general relates to vehicle access control systems. The claimed subject matter in particular relates to providing accessibility to a vehicle after ensuring that the user is wearing a helmet before driving the vehicle.

### BACKGROUND

For a two wheeled motor vehicle rider, it is important that the rider wears a helmet as a security measure. The helmet saves the rider from head injuries during accidents. Though in some regions it is mandated by law to wear a helmet, the riders skip wearing helmet, risking their lives.

The subject matter aims to tackle a significant challenge in modern vehicle security, particularly focusing on the operation of vehicle without helmet worn by the rider. The lack of helmet usage among motorcycle riders remains a significant safety concern, leading to increased risk of injury or death in case of accidents. Despite strict regulations, many riders neglect to wear helmets or remove them mid-ride, leaving them vulnerable. Current motorcycle systems lack an effective method to ensure that a helmet is properly worn before the vehicle is operated and during the ride.

The known arts provide access to a vehicle using different techniques. Some arts use biometric data for accessing the vehicle, or password or a mobile application. However they focus more on secure vehicle access and less on the rider safety. The known arts fall short of providing personal safety to the rider in addition to secure access to the vehicle.

As the known arts focus more on providing access to the vehicle through a user identification, they overlook the rider safety. Also the known arts do not continuously monitor the rider safety during the journey, for any violations in safety requirements. This may lead to compromising the rider safety. In the prior arts, the access may be impacted by ambient light or sound if biometric data is used. The prior arts may need manual intervention in such scenarios.

Hence, there is a need for a device which provides personal safety to the rider as well as provides access to the vehicle only after the personal safety is taken care of.

### SUMMARY

The claimed subject matter is defined in the independent claims. Further details are defined in the dependent claims.

The subject matter discloses a vehicle controller and a method of providing access to a vehicle. In an aspect the subject matter discloses a method to provide access to a vehicle, the method performed by a vehicle controller. The method comprises detecting switching on of the vehicle, pairing with a helmet, receiving a helmet data, from at least one sensor placed in the helmet on successful pairing with the helmet. The method comprises analyzing the helmet data to check whether the helmet is worn by a rider. The method comprises, when the rider is wearing the helmet, performing at least one of unlocking a side stand of the vehicle to enable the movement of the side stand to a disengaged position, and activating the electric system of the vehicle to enable the rider to drive the vehicle.

In an aspect, the subject matter discloses a method of pairing the vehicle controller 102 with the helmet using at least one of a Bluetooth communication, a Near Field Communication, NFC or a Wi-Fi communication.

In an aspect the subject matter discloses a method of receiving the helmet data comprising receiving at least one of a data from temperature sensors and touch sensors placed inside the helmet.

In an aspect the subject matter discloses a method of activating the electric supply of the vehicle, comprising closing an electric circuit in the vehicle to enable the rider to drive the vehicle.

In an aspect the method discloses determining a status of the helmet as 'worn' or 'not worn' at regular intervals when the side stand is in disengaged position and the helmet is paired with the vehicle controller.

In an aspect the method discloses determining the status of the helmet as 'worn', comprises determining that the data from the temperature sensors indicates that the temperature is above a predefined threshold and determining that the data from the touch sensors indicates that the pressure values in the helmet are above a predefined threshold.

In an aspect the method discloses determining the status of the helmet as 'not worn', comprises determining that the data from the temperature sensors indicates that the temperature in the helmet is equal to or below a predefined threshold for a predefined number of samples and, determining that the data from the touch sensors indicates that the pressure values in the helmet are equal to or below predefined threshold for a predefined number of samples or the data from the touch sensors is stuck to same level for a predefined number of samples.

In an aspect the method comprises reducing the speed of the vehicle to a safe limit, if the status of the helmet is determined as 'not worn' and generating a notification to the rider to stop the vehicle and wear the helmet.

In an aspect the method discloses reducing the speed of the vehicle (105) by sending a command to an electronic control unit which controls the vehicle (105).

In an aspect the method discloses receiving an override input from the rider for the notification and allowing the rider to increase the speed of the vehicle.

In an aspect the subject matter discloses a vehicle controller comprising a processor, a memory and a communication unit to establish communication with the helmet.

In an aspect the subject matter discloses a vehicle controller comprising input out interfaces to read helmet data, to control unlocking of the side stand and to control activation of electric system.

In an aspect the subject matter discloses a vehicle controller comprising a control mechanism to activate an electric system in the vehicle the control mechanism comprising at least one electronic switch.

### BRIEF DESCRIPTION OF THE DRAWINGS

The detailed description is described with reference to the accompanying figures. In the figures, similar reference numerals are used throughout the drawings to reference like features and components.
Figure 1 illustrates a vehicle controller for providing access to a vehicle
Figure 2 illustrates a method of providing access to a vehicle

### DETAILED DESCRIPTION OF THE INVENTION

The claimed subject matter now will be described with exemplary embodiments. However, the claimed subject matter may be embodied in many different forms and should not be construed as limited to the embodiments described herein. These embodiments are provided only as examples so that this disclosure is clear and concise.

Some of the terms used in this document may be used with different expressions and also interchangeably. Some examples are given below.

The term 'Vehicle' may indicate a two wheeled motor vehicle which includes Internal Combustion Engine driven or electrically driven vehicles. The term 'coupled' is used to indicate coupling between different elements, it may mean directly coupled or indirectly coupled through additional elements. The terms 'module' and 'component' may be used interchangeably. The modules may be implemented using the hardware, firmware or a combination. The terms 'Rider' and 'User' may be used interchangeably. The terms 'vehicle controller' and 'controller' may be used interchangeably.

Only the details/components required to describe the claimed subject matter in specific, are disclosed in this document. The details/components which are commonly known or understood by people skilled in the art may not be covered in this document.

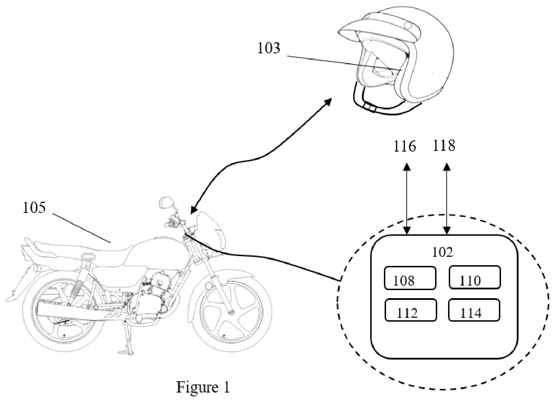

Figure 1 discloses a vehicle controller 102 for providing access to a vehicle 105. The vehicle controller 102 is part of the vehicle 105. The vehicle controller 102 is referred as controller 102. The controller 102 comprises a processor 108, a memory 110 coupled to the processor 108, input output interfaces 112. In an embodiment the controller 102 comprises a communication unit 114. In an embodiment the communication unit 114 may be external to the controller 102. The communication unit 114 establishes communication with the helmet 103 using at least one of a Bluetooth communication, a Near Field Communication, a Wi-Fi communication etc. The helmet 103 is a smart helmet and comprises temperature sensors 116 and touch sensors 118 placed in few places inside the helmet 103. The controller 102 receives the data from the temperature sensors 116 and touch sensors 118 through the input output interfaces 112. The touch sensors 116 are either capacitive or resistive sensors, they provide presence of touch and also the amount of pressure on the touch sensors 118.

When the rider wants access to the vehicle for driving, the rider switches on the vehicle 103 or activates the ignition. Activating the ignition may be done by a switch or inserting a key in the ignition switch and bringing it to ignition position. The controller 102 detects the switching on of the vehicle 105, through sensors. The controller 102, through the communication unit 114, initiates pairing process with the helmet 103 using a wireless connection, such as a Bluetooth, a Near Field Communication, or any other kind of wireless communication. This pairing process ensures that the helmet 103 needs to be within the required range of the vehicle 105. If the helmet 103 is not paired or not within the range, the controller 102 prevents the disengagement of the side stand of the vehicle 105, effectively locking the vehicle 105 from moving. This prevents the rider from attempting to operate the vehicle 105 without wearing a helmet 103, thus promoting safety of the rider.

Once the controller 102 and the helmet 103 are paired, the controller 102 starts receiving the helmet data from the helmet 103, through the input output interfaces 112. The helmet data comprises at least one of a data from temperature sensors 116 and a data from touch sensors 118 placed inside the helmet 103. The data from temperature sensors 116 indicates the temperature in the helmet 103 and the data from the touch sensors 118 indicates touch or pressure values in the helmet 103. There may be multiple temperatures sensors 116 and touch sensors 118 placed at different locations in the helmet 103.

The controller 102 starts analyzing the helmet data to determine whether the rider is wearing the helmet 103 or not. The controller comprises an analysis module for this purpose. The status of the helmet is set as 'worn' if the data from the temperature sensors 116 indicates that the temperature is above or equal to a predefined threshold and/or the data from the touch sensors 118 indicates that the touch values are above or equal to a predefined threshold. The status of the helmet is set as 'not worn' if the data from the temperature sensors 116 indicates that the temperature in the helmet 103 is below a predefined threshold for a predefined number of samples and the data from the touch sensors 118 indicates that the pressure values are below a predefined threshold for a predefined number of samples or the data from the touch sensors 118 is stuck to same level for a predefined number of samples. The status 'worn' indicates that the helmet 103 is worn by the rider and the status 'not worn' indicates that the helmet 103 is not worn by the rider.

Once the controller 102 determines that the status of the helmet 103 is 'worn', the controller 102 unlocks a side stand of the vehicle 105 to enable the movement of the side stand to a disengaged position. The disengaged position is the one where the side stand is not used for parking the vehicle 105. In addition the controller 102 may activate the electric system of the vehicle 105 to enable the rider to drive the vehicle 105.

Unlocking of the side stand is performed by the controller 102 using electro-mechanical components like cables, a lever, a solenoid etc. The electro-mechanical components are controlled using the input output interfaces 112. The activation of the electric system of the vehicle 105 may be performed by a control mechanism using electronic switches. Activating the electric system may refer to connecting battery to the fuel injection system in the Internal Combustion Engine, ICE, driven vehicles 105 or closing an electrical circuit in the vehicle 105 for driving or connecting battery to drive circuits in the electrically driven vehicles 105.

Now the vehicle 105 is ready for the rider to drive. The rider needs to move the side stand to the disengaged position and ride the vehicle 105.

Once the rider is riding the vehicle 105, the controller 102 keeps checking for the helmet status at regular intervals. This is to avoid the scenarios where the rider has removed the helmet 103. Also the controller 102 determines whether the helmet data is manipulated by removing the helmet 103 and stuffing the helmet 103 by any other object to create an impression that the helmet 103 is still worn by the rider.

To make sure that the rider is wearing the helmet 103, the controller 102 receives the data from temperature sensors 116 and touch sensors 118 as long as the vehicle 105 is in motion or the helmet is paired. If any other object is stuffed in the helmet 103, the temperature and the pressure values may not change for several readings. This is an indication that the helmet data is manipulated. The controller determines this as 'not worn' state of the helmet 103. Other scenario is that the temperature and the pressure values may change, however they may have different patterns compared to when the helmet 103 worn by the rider. The controller 102 analyzes different patterns of change in temperature and pressure to determine whether the helmet 103 is worn or not.

Once the controller determines that the helmet status has turned to 'not worn' and the vehicle is in motion or the vehicle is on or helmet 103 is paired with the controller 102, the controller 102 generates a notification to the rider. The notification may be a lamp on a dash board of the vehicle 105 or an audio beep or an audio message through the speaker in the dashboard. The rider has option to override the notification, by pressing an override button on the dashboard.

Along with the notification to the rider, the controller 102 brings down the speed of the vehicle 105 to a safe limit. Bringing down the vehicle speed may be performed by the controller 102 if the controller 102 is also controlling the vehicle 105. In an embodiment, the controller 102 may be responsible only for providing accessibility to the vehicle 105 and another electronic control unit, ECU, may control the vehicle 105. In such a scenario, the controller 102 sends a command to the ECU to reduce the speed of the vehicle 105. Communication between the controller 102 and the ECU may be through vehicle network.

If the controller 102 mistakenly detects a false object in the helmet 103 or incorrectly registers the helmet status as 'not worn', the rider has the option to manually override the notification by pressing the override button. This is to acknowledge the risks involved in riding without the helmet 103 before the controller 102 permits the disengagement of the side stand.

The subject matter's primary goal is to enforce helmet usage and gradually reduce speed of the vehicle 105 in case of a violation, ensuring that riders are always reminded of the critical safety provided by helmet 103.

All the notifications to the user may be in the form of switching on lamps in the dashboard, generating a beep, generating an audio message etc. The speaker and the lamps are in the dashboard and are controlled by the input output interfaces 112.

The processor 108 may comprise one or more of central processing units (CPU), digital signal processors (DSP), application specific integrated circuits (ASIC), a controller, field programmable gate arrays (FPGA), or any other hardware device, a firmware device, or any combination of these. The processor is configured using control registers, input output ports, firmware, input output interfaces etc. to perform the operations described herein.

In an embodiment, the memory 110 and comprises one or more volatile and nonvolatile memory components which are capable of storing data and instructions to be executed.

In an embodiment, the controller 102 is a standalone unit connectable to the dashboard and other sensors. In an embodiment, the vehicle controller 102 may be implemented in any existing Electronic Control Unit, ECU, in the vehicle 105.

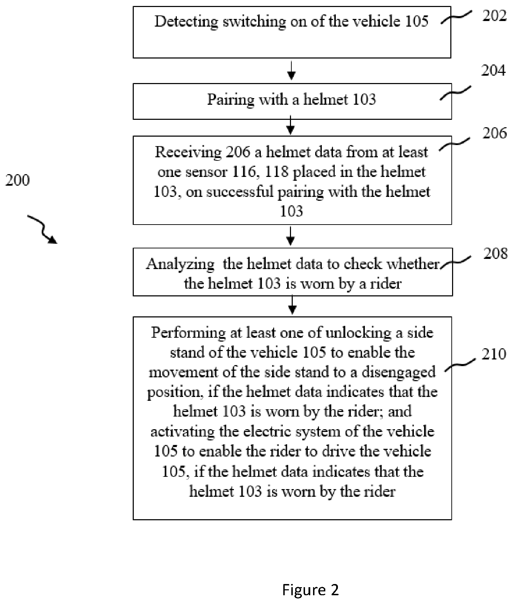

Figure 2 illustrates a method 200 of providing access to a vehicle 105. The method is performed by the controller 102. Step 202 discloses detecting switching on of the vehicle 105. Step 204 discloses pairing with a helmet 103. Step 206 discloses receiving a helmet data, from at least one sensor 116, 118 placed in the helmet 103, on successful pairing with the helmet 103. Step 208 discloses analyzing the helmet data to check whether the helmet 103 is worn by a rider. Step 210 discloses performing at least one of unlocking a side stand of the vehicle 105 to enable the movement of the side stand to a disengaged position, if the helmet data indicates that the helmet 103 is worn by the rider and activating the electric system of the vehicle 105 to enable the rider to drive the vehicle 105, if the helmet data indicates that the helmet 103 is worn by the rider.

The subject matter has below technical advantages, for example.

The controller 102 continuously monitors the helmet status, during the ride. If the controller 102 determine that the helmet 103 is removed or tampered with, the controller 102 generates a notification to the rider, reduces the vehicle speed to a safe limit thereby ensuring the safety of the rider.

The controller 102 ensures that the vehicle 105 cannot be operated without the helmet 103 being correctly worn, reducing the risk of head injuries to the rider.

The controller 102 gradually decreases the vehicle speed if the helmet 103 is removed, ensuring a safe deceleration, minimizing potential hazards from sudden stops or loss of control of the vehicle 105.

The controller 102 provides a manual override option allowing the rider to bypass the steps of wearing of helmet 103 in case of false detection or specific needs, offering flexibility while maintaining the core safety feature of helmet usage.

### LIST OF REFERENCE NUMERALS

- 102: Vehicle controller
- 105: Vehicle
- 108: Processor
- 110: Memory
- 112: Input output interfaces
- 114: Communication unit
- 116: Temperature sensors in the helmet
- 118: Touch sensors in the helmet

## Claims

1. A method (200) of providing access to a vehicle (105), the method (200) performed by a vehicle controller (102), the method (200) comprising:
detecting (202) switching on of the vehicle (105);
pairing (204) with a helmet (103);
receiving (206) a helmet data, from at least one sensor (116, 118) placed in the helmet (103), on successful pairing with the helmet (103);
analyzing (208) the helmet data to check whether the helmet (103) is worn by a rider; and
performing (210) at least one of:
unlocking, if the helmet data indicates that the helmet (103) is worn by the rider, a side stand of the vehicle (105) to enable the movement of the side stand to a disengaged position, the disengaged position is one where the side stand is not used for parking the vehicle (105); and
activating, if the helmet data indicates that the helmet (103) is worn by the rider, the electric system of the vehicle (105) to enable the rider to drive the vehicle (105).

2. The method (200) as claimed in claim 1, wherein pairing with the helmet (103) comprises pairing using at least one of:
a Bluetooth communication;
a Near Field Communication, NFC; and
a Wi-Fi communication.

3. The method (200) as claimed in claim 1, wherein receiving the helmet data comprises receiving at least one of:
a data from temperature sensors (116) placed inside the helmet (103); and
a data from touch sensors (118) placed inside the helmet (103).

4. The method (200) as claimed in claim 1, wherein activating the electric supply of the vehicle (105 comprises closing an electric circuit in the vehicle (105) to enable the rider to drive the vehicle (105).

5. The method (200) as claimed in claim 1, comprises determining a status of the helmet (103) as 'worn' or 'not worn' at regular intervals when the vehicle is on and the helmet (103) is paired with the controller (102).

6. The method (200) as claimed in claim 5, wherein determining the status of the helmet (103) as 'worn', comprises:
determining that the data from the temperature sensors (116) indicates that the temperature in the helmet (103) is above a predefined threshold; and
determining that the data from the touch sensors (118) indicates that the pressure values in the helmet (103) are above a predefined threshold.

7. The method (200) as claimed in claim 6, wherein determining the status of the helmet (103) as 'not worn', comprises:
determining that the data from the temperature sensors (116) indicates that the temperature in the helmet (103) is equal to or below a predefined threshold for a predefined number of samples; and
determining that the data from the touch sensors (116, 118) indicates that the pressure values in the helmet (103) are equal to or below predefined threshold for a predefined number of samples or the data from the touch sensors (118) is stuck to same level for a predefined number of samples.

8. The method (200) as claimed in claim 7, comprising:
reducing the speed of the vehicle (105) to a safe limit, if the status of the helmet (103) is determined as 'not worn'; and
generating a notification to the rider to stop the vehicle (105) and wear the helmet (103).

9. The method (200) as claimed in claim 8, wherein reducing the speed of the vehicle (105) comprises sending a command to an electronic control unit which controls the vehicle (105).

10. The method (200) as claimed in claim 8, comprising:
receiving an override input from the rider for the notification; and
allowing the rider to increase the speed of the vehicle (105).

11. A vehicle controller (102) for providing access to a vehicle (105), the vehicle controller (102) comprising:
a processor (104); and
a memory (106) coupled to the processor (104);
the processor (104) configured to:
detect switching on of the vehicle (105);
pair with a helmet (103);
receive a helmet data from at least one sensor (116, 118) placed in the helmet (103), on successful pairing with the helmet (103);
analyze the helmet data to check whether the helmet (103) is worn by a rider; and
perform at least one of:
unlocking, if the helmet data indicates that the helmet (103) is worn by the rider, a side stand of the vehicle (105) to enable the movement of the side stand to a disengaged position, the disengaged position is one where the side stand is not used for parking the vehicle (105); and
activating, if the helmet data indicates that the helmet (103) is worn by the ride, the electric system of the vehicle (105) to enable the rider to drive the vehicle (105).

12. The vehicle controller (102) as claimed in claim 11, wherein the helmet data comprises at least one of:
a data from the temperature sensors (116) placed inside the helmet (103); and
a data from touch sensors (118) placed inside the helmet (103).

13. The vehicle controller (102) as claimed in claim 11, comprising a control mechanism to activate an electric system in the vehicle (105) the control mechanism comprising at least one electronic switch.

14. The vehicle controller (102) as claimed in claim 11, comprising a communication unit (114) to establish communication with the helmet (103).

15. The vehicle controller (102) as claimed in claim 11, comprising input output interfaces (112) to receive helmet data, to control side stand unlocking and to control activation of the electric system.
